# FASCICULE DE BREVET EUROPEEN

(11) **EP 1 250 569 B1**
(45) Date de publication et mention de la délivrance du brevet: **17.01.2018**
(21) Numéro de dépôt: 01978567.4
(22) Date de dépôt: 18.10.2001
(51) Int. Cl.: G01F 23/00

(54) **DISPOSITIF EXTERNE DE SIGNALISATION DU PLEIN D'UN RESERVOIR**
EXTERNE VORRICHTUNG ZUR SIGNALISIERUNG DES AUFGEFÜLLTEN ZUSTANDES EINES BEHÄLTERS
EXTERNAL DEVICE INDICATING THAT A TANK IS FILLED UP

(30) Priorité: 19.10.2000 FR 0013358
(43) Date de publication de la demande: 23.10.2002
(73) Titulaire: Dupont, Jean-Luc, 77230 Longperrier (FR)
(72) Inventeur: Dupont, Jean-Luc, 77230 Longperrier (FR)
(74) Mandataire: Loyer & Abello
(86) Numéro de dépôt international: PCT/FR2001/003230
(87) Numéro de publication internationale: WO 2002/033360

(56) Documents cités:
- EP-A- 0 738 881
- DE-A- 3 235 982
- GB-A- 2 339 909
- US-A- 2 680 169

## Description

L'invention concerne un dispositif externe de signalisation du plein d'un réservoir, en particulier, mais non exclusivement, un réservoir de carburant pour bateau.

Un réservoir de carburant pour bateau comporte une conduite de prise d'air qui sert en outre de trop plein, l'utilisateur étant généralement averti du plein de son réservoir par un rejet du carburant dans l'eau, par ladite conduite.

Cette façon de procéder occasionne de nombreux inconvénients et notamment une pollution de l'eau, une salissure du bateau, des émanations provenant du carburant et le gaspillage de ce dernier.

On retrouve un problème analogue sur les cuves à mazout pour chaudières, les risques de pollution se retrouvant dans ce cas à l'intérieur ou à l'extérieur des bâtiments où se trouvent lesdites cuves.

La position et la structure du réservoir de carburant dans un bateau où d'une cuve pour une chaudière, de même que les méthodes de remplissage, ne permettent pas de prévoir un réservoir du type de celui d'un véhicule automobile avec un système d'arrêt incorporé dans la pompe de remplissage actionné par le refoulement du carburant, le dégazage s'effectuant par le tuyau de remplissage lui-même.

Il a toutefois été imaginé des systèmes assez complexes qui présentent outre leur aspect onéreux, l'inconvénient qu'il est difficile, voire impossible, d'adapter de tels systèmes sur les réservoirs existants.

C'est pourquoi l'inventeur a cherché et conçu un dispositif simple et facilement adaptable qui permet d'éviter les inconvénients précités.

Il est déjà connu du document GB-2 339 909 A un appareil d'alerte de trop plein d'un réservoir, en l'occurrence d'un réservoir de W.C., ledit appareil comportant un récipient qui est relié audit réservoir et qui est pourvu à sa partie supérieure d'un évent et dans sa partie inférieure d'un flotteur. Cet appareil connu est destiné à une application particulière qui exige un certain positionnement et qui nécessite un vidage à chaque fonctionnement. Un appareil similaire de signalisation du remplissage d'un conteneur est décrit dans le document EP 0 738 881 A2. Le dispositif selon l'invention qui comporte comme dans le dispositif précité un récipient qui est relié au réservoir et qui est pourvu à sa partie supérieure d'un évent et dans sa partie inférieure d'un flotteur, est par contre notamment remarquable en ce que le fond dudit récipient est disposé au-dessus ou sensiblement au même niveau que le niveau maximum de remplissage du réservoir, le récipient étant relié par son fond au voisinage de la partie supérieure du réservoir au moyen d'une conduite de communication, tandis que le flotteur présente un contact électrique connecté à un boîtier de signalisation et de commande disposé au voisinage de l'embouchure d'un conduit de remplissage du réservoir, afin de générer au moins un signal avertisseur lorsque ledit récipient est en partie rempli par la conduite de communication après le remplissage complet du réservoir.

Selon un mode de réalisation, le contact électrique du flotteur est en position de circuit électrique fermé lorsque ledit flotteur n'est pas sollicité et en position de circuit électrique ouvert dès le soulèvement du flotteur.

Comme déjà dit, l'invention est en particulier destinée à équiper un réservoir pourvu d'une conduite de prise d'air comme par exemple une cuve à mazout ou un réservoir de carburant pour bateau et dans ce cas, le récipient est inséré entre deux parties de ladite conduite de prise d'air, respectivement une partie amont qui sert de conduite de communication avec le réservoir et une partie aval qui est reliée à l'évent du récipient.

Plus particulièrement encore dans le cas d'un réservoir de carburant pour bateau, la partie aval de la conduite de prise d'air relie l'évent du récipient à un évent aménagé sur la coque du bateau.

L'invention sera bien comprise à la lecture de la description qui va suivre et qui se réfère aux dessins annexés dans lesquels :
- la figure 1 montre schématiquement un dispositif selon l'invention équipant un bateau,
- la figure 2 montre schématiquement le récipient d'un dispositif selon l'invention,
- la figure 3 est un schéma électrique du boîtier de signalisation et de commande du dispositif selon l'invention.

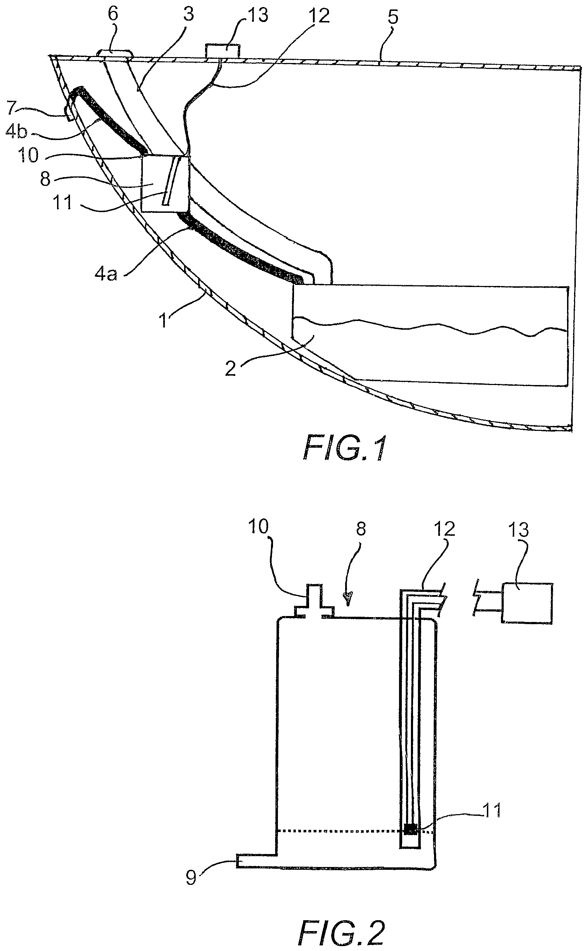

Sur la figure 1, on peut voir une partie de la coque 1 d'un bateau qui est pourvue classiquement d'un réservoir de carburant 2 muni d'un conduit de remplissage 3 et d'une conduite de prise d'air, réalisée ici en deux parties 4a, 4b pour les raisons qui sont précisées ci-après.

Comme le montre bien la figure 1, le conduit de remplissage 3 débouche sur le pont 5 du bateau et il est muni à son extrémité d'un bouchon d'obturation 6.

La conduite de prise d'air 4a, 4b est branchée comme il sera précisé ci-après à la partie supérieure du réservoir et débouche vers l'extérieur par un évent 7 aménagé dans la partie supérieure de la coque 1 du bateau.

Le carburant, généralement du gazole, est déversé dans le réservoir 2 par le conduit de remplissage 3.

Dans un dispositif classique non équipé selon l'invention et dans lequel la conduite de prise d'air est d'un seul tenant, pour obtenir un plein, on effectue le remplissage jusqu'à ce que le carburant s'échappe par l'évent 7 avec tous les inconvénients rappelés ci-avant.

Le dispositif selon l'invention prévoit un récipient 8 qui est inséré comme le montre la figure 1 entre les parties dites respectivement amont 4a et aval 4b de la conduite de prise d'air.

Le récipient 8 est disposé au-dessus du réservoir 2 auquel il est relié par ladite partie amont 4a qui relie la partie supérieure dudit réservoir 2 avec une embouchure 9 (figure 2) aménagée dans la partie inférieure du récipient 8.

Comme le montre la figure 2, le récipient 8 est pourvu en outre à sa partie supérieure d'une embouchure 10 destinée à recevoir la partie aval 4b de la conduite de prise d'air.

La partie 4b de la conduite étant reliée à l'évent 7 du bateau, on comprend que d'une manière générale, pour d'autres applications, l'embouchure 10 du récipient pourrait constituer directement un évent, sans nécessiter de conduite intermédiaire disposée entre les éléments 10 et 7.

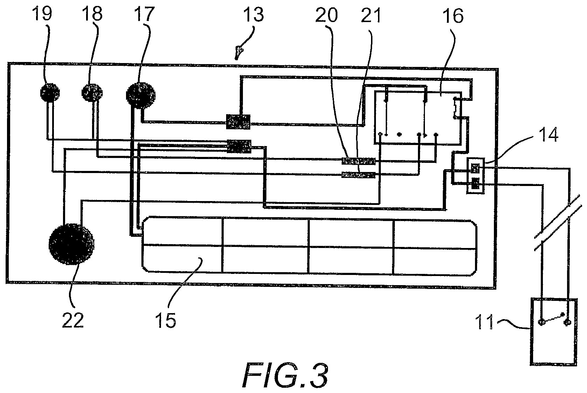

Le récipient 8, comme le montre la figure 2, est de plus muni d'un flotteur 11 à contact électrique, connecté électriquement par un câble 12 à un boîtier de signalisation et de commande 13 vu plus en détail sur la figure 3, ce boîtier étant prévu pour être disposé au voisinage de l'extrémité du conduit de remplissage 3 fermé par le bouchon 6.

On comprend qu'avec une telle disposition, le récipient 8 commence à se remplir de gazole lorsque le réservoir 2 est déjà plein, et le flotteur 11 est prévu pour générer un signal lorsque le niveau atteint dans ledit récipient 8 correspond par exemple à la ligne indiquée en pointillé sur ladite figure 2.

Dans le mode de réalisation représenté, le flotteur non sollicité ferme un circuit électrique qui s'ouvre lorsque ledit flotteur se soulève, ce qui crée le signal.

De la sorte, le bon fonctionnement est vérifié automatiquement puisque le circuit électrique est ouvert uniquement en cas de présence de gazole ou en cas de mauvais positionnement du flotteur (par exemple dû à un non retour en position initiale).

Sur la figure 3, on peut voir un schéma électrique du boîtier de commande et de signalisation 13, ce boîtier étant donc connecté au flotteur 11 par un moyen de connexion 14 relié ici, d'une part, à une batterie d'alimentation ou des piles 15, et d'autre part, à un relais 16.

Le relais 16 est commandé par un interrupteur 17 et il est connecté à des voyants 18 et 19 via des résistances respectivement 20 et 21, et ici en outre à un buzzer 22.

De la sorte, en agissant sur l'interrupteur 17, on contrôle le flotteur 11 et le voyant 18 (par exemple de couleur verte) s'allume.

Quand le flotteur 11 est sollicité, c'est-à-dire lorsque le réservoir 2 est plein, le gazole remonte dans le récipient 8 par la partie de conduite 4a jusqu'à entraîner le soulèvement du flotteur 11.

Comme déjà dit, le soulèvement du flotteur 11 entraîne l'ouverture de son circuit électrique, ce qui provoque alors le basculement du relais 16 et par le fait l'allumage du voyant 19 (par exemple de couleur rouge) ainsi qu'ici l'actionnement du buzzer 22 indiquant que le réservoir 2 est plein, tandis que le voyant 18 s'éteint.

On dispose alors d'au moins le temps du remplissage complet du récipient 8 pour arrêter de déverser du gazole.

Outre les avantages déjà mentionnés, on comprend qu'un dispositif selon l'invention est d'une facilité de montage tout à fait remarquable et sans aucune adaptation particulière des réservoirs existants puisqu'il suffit de l'insérer comme décrit, dans la conduite de prise d'air déjà existante qui relie le réservoir à l'évent de la coque du bateau.

Toutefois, il est clair aussi que cette application aux réservoirs de bateau n'est pas la seule. Outre les cuves pour chaudières comme déjà dit ci-avant, d'autres réservoirs tels que des réservoirs pour camions ou engins par exemple, peuvent aussi être équipés de dispositifs selon l'invention.

## Revendications

1. Dispositif de signalisation du plein d'un réservoir (2) d'un bateau, réservoir muni d'un conduit de remplissage (3) et d'une conduite de prise d'air réalisée en deux parties (4a, 4b), comprenant un récipient (8) inséré entre les deux parties 4a et 4b, relié audit réservoir (2) et pourvu à sa partie supérieure d'une embouchure (10) et d'un flotteur (11), le fond dudit récipient (8) étant disposé au-dessus ou sensiblement au même niveau que le niveau maximum de remplissage dudit réservoir (2), ledit récipient étant relié par son fond au voisinage de la partie supérieure du réservoir (2) au moyen de la conduite de communication (4a), ledit flotteur (11) présentant un contact électrique connecté à un boîtier de signalisation et de commande (13), disposé au voisinage de l'embouchure du conduit de remplissage (3) dudit réservoir (2) fermé par un bouchon (6) **caractérisé par le fait que** le récipient (8) est relié à un évent (7) disposé sur la coque (1) du bateau par la conduite de prise d'air (4b) reçue par l'embouchure (10), le boîtier de signalisation et de commande (13) générant au moins un signal d'alarme lorsque le récipient (8) est en partie rempli par la conduite de communication (4a) après le remplissage complet du réservoir (2).

2. Dispositif de signalisation, selon la revendication 1, **caractérisé par le fait que** le flotteur (11) se déplace entre une première position dans laquelle le contact électrique du flotteur (11) ferme un circuit électrique et une seconde position dans laquelle le flotteur (11) ouvre un circuit électrique.

## Patentansprüche

1. Vorrichtung zur Signalisierung des Füllstandes eines Schifftanks (2), wobei der Tank mit einer Füllleitung (3) und einer Luftführenden Leitung, welche aus zwei Teilen (4a, 4b) besteht, ausgestattet ist, umfassend
ein Behältnis, welches zwischen den beiden Teilen 4a und 4b eingefügt ist,
und welches mit dem Tank (2) verbunden ist und im oberen Bereich mit einer Einmündung (10) und einem Schwimmer (11) ausgestattet ist, wobei der Boden des Behältnisses (8) über oder im Wesentlichen auf gleicher Höhe wie der maximale Füllstand des Tanks (2) angeordnet ist, wobei das Behältnis über seinen Boden im Umfeld des oberen Bereiches des Tanks (2) mittels der Verbindungsleitung (4a) mit diesem verbunden ist, wobei der Schwimmer (11) einen elektrischen Kontakt, welcher mit einer Signal- und Steuereinheit verbunden ist, aufweist, welcher im Umfeld der Mündung der Füllleitung (3) des Tanks, welche mittels eines Verschlusses verschlossen ist, angeordnet ist,
**dadurch gekennzeichnet, dass** das Behältnis (8) mit einer auf der Schiffshülle (1) angeordneten Lüftungsöffnung über die Luftführende Leitung, welche in der Mündung (10) aufgenommen ist, verbunden ist, wobei die Signal- und Steuereinheit (13) mindestens ein Alarmsignal erzeugt, wenn das Behältnis (8) durch die Verbindungsleitung (4a) nach der vollständigen Befüllung des Tanks (2) zum Teil befüllt ist.

2. Vorrichtung zur Signalisierung gemäß Anspruch 1, **dadurch gekennzeichnet, dass** der Schwimmer (11) sich zwischen einer ersten Position, in welcher der elektrische Kontakt des Schwimmers (11) einen Stromkreis schließt, und einer zweiten Position, in welcher der Schwimmer (11) eine Stromkreis öffnet, bewegt.

## Claims

1. A signalling device for indicating when the tank (2) of a boat is full, said tank being equipped with a feed line (3) and a two-part air-venting conduit (4a, 4b), including a container (8) inserted between the two parts 4a and 4b, connected to said tank (2) and equipped in its upper part with an opening (10) and a float (11), the base of said container (8) being located above or at approximately the same level as the maximum filling level of said tank (2), the bottom of said container being connected in the vicinity of the upper part of the tank (2) by means of the communication conduit (4a), said float (11) having an electrical connection to a signal and control box (13), located in the vicinity of the opening of the feed line (3) of said tank (2) sealed by a cap (6) **characterised in that** the container (8) is connected to a vent (7) located on the hull (1) of the boat by the air-venting conduit (4b) attached to the opening (10), the signal and control box (13) generating at least one alarm signal after the tank (2) is completely filled and the container (8) is partly filled via the communication conduit (4a).

2. A signalling device, according to claim 1, **characterised in that** the float (11) moves between a first position in which the electrical connection of the float (11) closes an electrical circuit and a second position in which the float (11) opens an electrical circuit.
